Europäisches Patentamt

European Patent Office

Office européen des brevets

(19)

(11) **EP 1 405 706 A1**

(12) **EUROPEAN PATENT APPLICATION**

(43) Date of publication:
**07.04.2004 Bulletin 2004/15**

(51) Int Cl.[7]: **B29B 17/02**, B29B 17/00

(21) Application number: **03256158.1**

(22) Date of filing: **30.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **02.10.2002 JP 2002289893
02.10.2002 JP 2002289894**

(71) Applicant: **Nippon Steel Chemical Co., Ltd.
Tokyo 141-0031 (JP)**

(72) Inventors:
• **Miyanaga, Toshiaki,
c/o Nippon Steel Chem Co. Ltd.
Tokyo 141-0031 (JP)**

• **Motegi, Takuji, c/o Material Recycle of Japan Co.
Kitakyushu-shi, Fukuoka 803-0801 (JP)**
• **Yamada, Katsuhiro,
c/o Nippon Steel Chem. Co. Ltd.
Kisarazu-shi, Chiba 292-0836 (JP)**
• **Aoi, Haruhiko, c/o Shinnikka Env. Eng. Co. Ltd.
Kitakyushu-shi, Fukuoka 804-0002 (JP)**

(74) Representative: **Thomson, James B.
Frank B. Dehn & Co.
179 Queen Victoria Street
London EC4V 4EL (GB)**

(54) **Method of recycling waste plastic**

(57) The present invention relates to a closed recycle in which the plastic of a discarded household electrical appliance can be used again for the same model of the household electrical appliance. This process includes: a sorting out step (1) for sorting out the waste plastic in accordance with the kind of resin; a pulverizing step (2) for pulverizing the waste plastic; a surface treating step (3) for subjecting the pulverized waste plastic to a surface grinding treatment under a condition that no liquid is used; a homogeneously mixing step (4) in which the surface treated waste plastic is measured to obtain a batch having a predetermined amount and the batch is mixed to obtain a homogenized recovered plastic; and optionally a quality control step (5) for grading the recovered plastic for each batch; and an incorporating step (6) for formulating the recovered plastic for the same model of use for the household electrical appliance. It is preferable that the quality control step grades the recovered plastic based on specific gravity and melt flow rate as items of the quality control, and that the incorporating step determines the formulation of a compound based on the classification corresponding to the results of the quality control for each batch of the waste plastic.

Fig.1

EP 1 405 706 A1

**EP 1 405 706 A1**

### Description

Technical Field

The present invention relates to a method of recycling a waste plastic composed of various kinds of plastics, andmore particularly to a method of recycling a waste plastic, by which a waste plastic used for a household electrical appliance is recycled to produce a recycled compound capable of being reused for the same model of the household electrical appliance.

Background Art

Currently, the treatment of various kinds of waste plastics in non-industrial wastes and industrial wastes is a social problem. Therefore, a way of recycling waste plastics, an alternative to fuel or oil production, and use as a plastic component for general purpose goods such as sundries are being promoted. However, they are merely a so-called cascade type recycle into low quality goods inwhichpotential performance of an original plastic is not utilized, and it is pointed out that they are not preferable ways of recycling to create a recycling-based society, which is an original goal. Actually, such a cascade type recycle has some problems concerning high cost or influence to the environment. Specifically, there exists a criticism that: since as an alternative for fuel it does not contribute to the reduction of $CO_2$ at all, it is merely an incineration. Furthermore, oil production has a problem in that a process for the oil production is expensive. In addition, regarding use as a plastic component for general purpose goods such as sundries, since it is difficult to use the component for the next recycle, it is pointed out that such use is merely an extension of a disposal process. In other words, since such a cascade type recycle has no capability of carrying out the next recycle after the waste plastic is once recycled, the cascade type recycle actually does not contribute to achievement of a true circulative society at all. Therefore, as an ideal way of recycling a waste plastic, there has been a demand to establish a true material recycle technique in which a component can be recycled into the same component as the original.

JP 2, 553, 807 B discloses a method which includes pulverizing various resin molded products covered with a resin coating into plural pieces (which have a coarse particle shape) to be treated, and separating and removing the resin coating from the piece to be treated in a coarse particle shape, thereby recovering and granulating a resin material usable as a raw material. The publication discloses a method and an apparatus which further and optionally includes classifying the resin material usable as a raw material, recovering and granulating a resin material particle having a predetermined particle diameter, and molding or pelletizing the resin material particle to be recycled. Also, JP 3 , 279, 732 B discloses a method of recycling a used varnished plastic component, especially an automotive component. The method includes coarsely crushing the plastic component, and finely pulverizing the coarsely crushed plastic component to form a fiber, thereby separating a varnish particle and treating the plastic component. JP 2001-145920 A describes a method which includes polishing a recovered resin to peel foreign materials, thereby recycling the recovered resin. JP 2002-177934 A describes a method of recovering an electrical appliance, which includes classifying resins according to their materials and recycling the classified resin. JP 2002-290424 A describes a method of recovering a flame retardant resin and JP 2002-292350 A describes a method of discriminating a waste resin.

However, since the above-mentioned recycle techniques are used only for specific plastic products such as a resin molded product covered with a resin coating and a varnished plastic component, the techniques are not suitable for recycling various kinds of waste plastics in non-industrial wastes and industrial wastes.

Disclosure of the Invention

It is an object of the present invention to provide a recycle process of a waste plastic which overcomes the above-mentioned problems with regard to recycling various kinds of waste plastics in non-industrial wastes and industrial wastes, which effectively performs a material recycle of a waste plastic by a simple system which is low cost and easy and suppresses energy consumption, which contributes to achieving of a true circulative society, and especially, which is applicable to a closed recycle in which a plastic of a discarded household electrical appliance can be used again for the same model of the household electrical appliance. Especially, it is an object of the present invention to provide a simple system realizing a closed recycle of a flame retardant plastic which was difficult to be applied to a closed recycle.

Thus, the present invention relates to a method of recycling a waste plastic composed of various kinds of plastics, characterized in that it comprises: (1) a sorting out step of sorting out the waste plastic in accordance with the kind of a resin; (2) a pulverizing step of pulverizing the waste plastic; (3) a surface treating step of subj ecting the pulverized waste plastic to a surface grinding treatment under a condition that no liquid is used; and (4) a homogeneously mixing step in which the surface treated waste plastic is measured to obtain a batch having a predetermined amount and the batch is mixed to obtain a homogenized recovered plastic.

Also, the present invention relates to a method of recycling a waste plastic which was used for a household electrical appliance to obtain a recycled compound which is capable of being used for the same model of household electrical appliance, characterized in that in addition to above mentioned steps (1) to (4) , it further comprises: (5) a quality control step of grading the recovered plastic for each homogeneously mixed batch; and (6) an incorporating step of formulating the recovered plastic for use in the original household electrical appliance.

Amethod of recycling a waste plastic according to the present invention includes the following embodiments.

According to the method of recycling a waste plastic, the sorting out step (1) includes: distinguishing the kind of the resin by using at least one distinguishing method selected from the group consisting of a distinguishing method based on a sound of hammering the resin, a distinguishing method based on the degree of whitening or a rupture condition when the resin is bent, a distinguishing method based on solubility or erosivity (degree of erosion) in an organic solvent, a dist ingui shing method based on burning manner, color of smoke or smell when the resin is burned, a distinguishing method based on a spectroscopic analysis such as middle infrared, near infrared, infrared or Raman spectrometry, and a distinguishing method based on a difference in specific gravity; and sorting out the same kind of the resin.

According to the method of recycling a waste plastic, the pulverizing step (2) includes: (2A) a first pulverizing step of crushing the waste plastic into one having a dimension of 300 mm or less; and (2B) a second pulverizing step of pulverizing the crushed waste plastic into one having a dimension of 20 mm or less.

The method of recycling a waste plastic may include (6) an incorporating step of incorporating an additive or a virgin plastic into each recovered and homogenized plastic depending on quality of each recovered and homogenized plastic, subsequent to the homogeneously mixing step (4).

According the method of recycling a waste plastic, the surface treating step (3) may include means for collecting produced dust.

The method of recycling a waste plastic may further include quantitative transporting means, which quantitatively transports the waste plastic, between the pulverizing step (2) and the surface treating step (3).

The method of recycling a waste plastic may further include temporary storing means, which temporarily stores the surface treated waste plastic, between the surface treating step (3) and the homogeneously mixing step (4).

The method of recycling a waste plastic may further include light weight foreign material removing means in the quantitative transporting means or the temporary storing means.

According to the method of recycling a waste plastic, the surface treating step (3) removes a foreign material existing on the surface of the waste plastic or a surface deteriorated layer of the waste plastic.

According to the method of recycling a waste plastic, the surface treating step (3) is a dry cleaning treatment and can employ an air blower.

According to the method of recycling a waste plastic, the homogeneously mixing step (4) can be performed for a batching unit of 100 to 5,000 kg and at a mixing time of 10 to 60 minutes.

The method of recycling a waste plastic may further include metal removing means between the first pulverizing step (2A) and the secondpulverizing step (2B), orbefore the homogeneously mixing step (4).

According to the method of recycling a waste plastic, the waste plastic is preferably from a discarded household electrical appliance and a recycled recovered plastic is used again for the same model of household electrical appliance.

According to the method of recycling a waste plastic, the waste plastic is preferably a flame retardant plastic.

The method of recycling a waste plastic may use dust collected by a dust collecting means as a raw material for a coke, a cement or a blast furnace.

According to the method of recycling a waste plastic, the waste plastic can be treated with a dry recycle treatment under a condition that no liquid is used throughout the processes.

According to the method of recycling a waste plastic, the quality control step (5) may grade the recovered plastic based on a specific gravity and a melt flow rate as items of the quality control.

According to the method of recycling a waste plastic, the incorporating step (6) may determine a formulation of a compound based on the classification corresponding to the results of the quality control for each batch of the waste plastic.

According to the method of recycling a waste plastic, the waste plastic is more preferably a flame retardant plastic which incorporates an additive or a virgin plastic with the waste plastic.

Brief Description of the Drawings

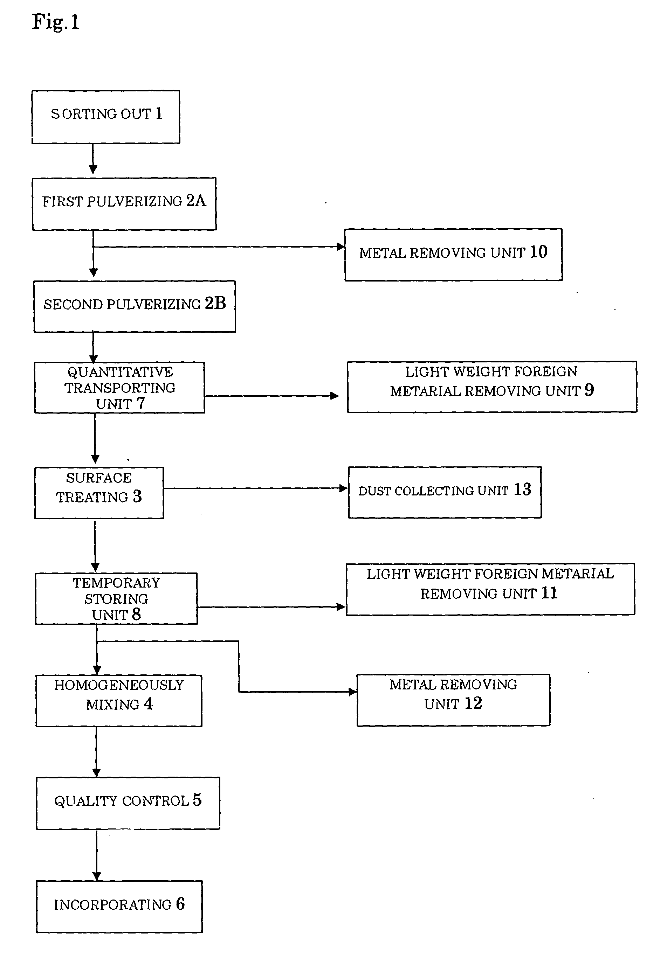

Fig. 1 is a flow sheet illustrating an example of a method of recycling a waste plastic according to the present invention.

Detailed Description of the Invention

Hereinafter, a method of recycling a waste plastic according to the present invention will be described with reference to Fig. 1. However, the present invention is not limited to the description and includes substitution and modification of each step and process so long as an object of the present invention is achieved and it falls within the scope defined by the claims.

Examples of a waste plastic to be possibly treated in the present invention include various waste plastics such as household electrical appliance wastes or information equipment wastes. Specific examples thereof include: a body of equipment formed from a flame retardant plastic such as a television cabinet, a body of a personal computer, a body of a display equipment, a body of a printer, or a body of a copying machine; and a part of the body of equipment such as a back cover component of a television.

A household electrical appliance means an electrical appliance which is usable in a home. Therefore, the household electrical appliance includes an electrical appliance which is usable not only in a home but also in an office or the like. An electrical appliance using a thermoplastic resin is a subject. Examples of the household electrical appliance include: audio visual (AV) equipment such as a television, a videocassette recorder, a radio, a compact disk (CD) player or a mini disk (MD) player; information technology (IT) equipment such as a personal computer, a printer or a monitor; a refrigerator; an air conditioner; and a vacuum cleaner. A molded product of a thermoplastic resin is widely used as a casing or the like for such an electrical appliance .

In the sorting out step (1), preferably, household electrical appliances are initially classified into the respective types such as a television, a personal computer, and an air conditioner, and then a resin casing or component is detached from each household electrical appliance to sort out respective portions thereof. As a result, a relatively uniform kind of a waste plastic can be obtained.

In the sorting out step (1) , the method of sorting out a waste plastic is not specifically limited. Preferably, the kind of the resin is distinguished by using at least one distinguishing method selected from the group consisting of: a distinguishing method based on a sound of hammering the resin; a distinguishing method based on degree of whitening or a rupture condition when the resin is bent; a distinguish method based on erosivity (degree of erosion) in an organic solvent; a distinguish method based on a burning manner, color of smoke or smell when the resin is burned; a distinguishing method based on a spectroscopic analysis such as middle infrared, near infrared, infrared or Raman spectrometry; and a distinguishing method based on a difference in specific gravity. Furthermore, existence of a flame retarder or the kind of flame retarder can be distinguished. After the kind of the resin is distinguished in this way, the waste plastic is sorted out into the same kind resin manually and/or mechanically.

Especially, the distinguishing method based on a sound of hammering the resin, and the distinguishing method based on degree of whitening or a rupture condition when the resin is bent are preferred because the methods are simple and easy. For example, the former method utilizes the fact that a sound of hammering a polystyrene type resin is a high stiffness sound which is high tone and reverberatory, and that a sound of hammering a polyolefin type resin such as a polypropylene resin or a polyethylene resin is a low stiffness sound which is low tone and dull. Furthermore, the latter method utilizes the fact that a polystyrene type resin is whitened and then easily suffers from brittle rupture when the resin is bent, and that a polyolefin type resin such as a polypropylene resin or a polyethylene resin is just bent and hardly ruptured (in other words, the resin has an excellent hinge property) when the resin is bent.

Furthermore, the distinguishing method based on a spectroscopic analysis such as middle infrared, near infrared, infrared or Raman spectrometry is preferred in view of precision of sorting out the kind of the resin. According to such a distinguishing method based on a spectroscopic analysis, it is possible to avoid a distinguishing error by an operator using the distinguishing method based on a sound of hammering the resin, and in the distinguishing method based on a degree of whitening or a rupture condition when the resin is bent. As a result, it is possible to more easily and more precisely sort out the resin. For example, the method on a spectroscopic analysis is performed using an instantaneous simple analytical instrument utilizing a spectroscopic analysis for a plastic such as a plastic analyzer utilizing a reflective middle infrared spectroscope of middle infrared radiation (manufactured by Sony Corporation), a plastic material distinguishing machine PLID-3 model utilizing near infrared radiation (manufactured by DKK-TOA Corporation), a plastic automatic distinguishing system VIR-9500 model utilizing infrared radiation (manufactured by JASCO Corporation), and a plasector (manufactured by Matsushita Electric Industrial Co., Ltd.) utilizing infrared or Raman spectrometry.

In the case where a waste plastic contains a flame retardant plastic, it is preferred that: the waste plastic be divided into a flame retardant plastic and a non-flame retardant plastic, and furthermore the flame retardant plastic be classified according to the kind of the plastic and a grade of flame retardancy (e.g., V-0 or V-2). Since the kind of a resin of a relatively new product is distinguishable from a sign marked on a plastic molded product of the relatively new product, it is easy to sort out the kind of the resin. Furthermore, if information is provided by a manufacturer or if a waste plastic had been handled before, such information can be preferably utilized. Especially, in the case where a resin member containing a halogen type flame retarder and a resin member containing non- halogen type flame retarder are sorted out even if the existence of the halogen type flame retarder in the resin member is unclear, the distinguishing method based on a specific gravity and the distinguishing method based on a spectroscopic analysis are preferred. Since a resin containing a flame retarder has a larger specific gravity by content of the flame retarder than that of a resin member containing no flame retarder, it is possible to relatively easily sort out the resins. However, if there additionally exists a resin containing an inorganic filler or the like, it is difficult to sort out the resin containing a flame retarder and the resin containing no flame retarder simply based on a distinction by a specific gravity. In such a case, it is possible to easily and precisely sort out the above- mentioned resins based on a spectroscopic analysis evaluating whether there exists a peak resulting from the flame retarder contained in the resin.

The sorted out waste plastic may be pulverized at once into one having a predetermined dimension in the pulverizing step (2) . However, it is preferred that the pulverizing step (2) be divided into a first pulverizing step (2A) and a second pulverizing step (2B). Specifically, it is desirable that the waste plastic be initially coarsely crushed into one having a dimension of 300 mm or less in the first pulverizing step (2A) , and then the coarsely crushed plastic be pulverized into one having a dimension of 20 mm or less in the second pulverizing step (2B). This two step process contributes to an improvement of transport efficiency or effective use of a storage place in the case where sorting out and pulverization are performed respectively at different places. In the first pulverizing step (2A) , the waste plastic is crushed into one having a dimension of preferably 200 mm or less and more preferably 100 mm or less. Examples of a crushing unit include: a uniaxial type crusher; a multi-axial type crusher such as a biaxial type crusher, a triaxial type crusher, or a tetra-axial type crusher; a cube cutter type crusher; a helical cutter type crusher; a mill type crusher; a hummer type crusher; and a cutter mill type crusher.

In the second pulverizing step (2B), the waste plastic is pulverized into one having an average diameter of 1 to 20 mm and preferably of 3 to 10 mm. If the particle size of the waste plastic is less than an average diameter of 1 mm, or, on the contrary, if the particle size of the waste plastic is more than an average diameter of 20 mm, it is difficult to peel off a surface deteriorated layer in the surface treating step (3) which is the next step. Here, the term "average diameter" means an average diameter of a plane in the case where the waste plastic has a plate shape derived from a molded product such as a cabinet. Examples of a pulverizing unit include: a uniaxial type pulverizer; a multi-axial type pulverizer such as a biaxial type pulverizer, a triaxial type pulverizer, or a tetra-axial type pulverizer; a cube cutter type pulverizer; a helical cutter type pulverizer; a mill type pulverizer; a hummer type pulverizer; and a cutter mill type pulverizer. The multi- axial type pulverizer such as a biaxial type pulverizer, a triaxial type pulverizer, or a tetra-axial type pulverizer is preferred.

The waste plastic pulverized into a predetermined dimension in the pulverizing step (2) is subjected to a surface treatment in the surface treating step (3) optionally through a quantitative transporting unit (7). By performing the surface treatment, it is possible to effectively remove a foreign material or a deteriorated layer existing on the surface of the waste plastic. Especially, removal of the surface deteriorated layer of the waste plastic is preferred in order to make it possible to keep physical properties of a recycled plastic high quality. The surface treating step (3) in the present invention includes a dry surface treatment in which a surface grinding treatment is performed under a condition that no liquid is used. More specifically, this treatment utilizes a principle that the pulverized products forcefully hit each other to abrade or rub the respective surface portions thereof. A dry cleaning treatment is exemplified. This is performed as follows. The waste plastic is fed into an abrading chamber by an air blower or the like, or a pulverized product is fed into an abrading chamber rotating at a high speed without using an air blower, so as to effectively grind the surface portion thereof by abrasion and friction due to mutual hitting of the pulverized products or contact of the pulverized product with a wall of the chamber. The dry surface treatment using an air blower is preferred because a treating apparatus is easily operated for the following reasons. A by-product sludge involved in the treatment is not produced. A heating process is not required. It is not necessary to use water or oil.

Examples of such a dry cleaning treatment apparatus include a cleaning separator apparatus (manufactured by Ain K.K., described in JP 2,553,807 B, JP 2,945,809 B and JP 3,048,283 B) and a separation apparatus (manufactured by Himont Incorporated, described in JP 3,279,732 corresponding to DE-P4217005.2). These are compact and easily operated. Both of these apparatus selectively separate a coated film by utilizing a physical property difference between the coated film and a resin. It has been found that the surface portion of a waste plastic can be separated by using such an apparatus . It is conceivable that since the deterioration of the surface layer is large, the physical properties thereof are different from those of an inner layer and a rupture section. Therefore, any apparatus utilizing such a phenomenon can be effectively used. Also, an MR type dry cleaning apparatus (manufactured by Duales System Deutschland GmbH) , which utilizes the combination of a high speed rotating blade, a frictional force, centrifugation, and a wind force, separates a waste plastic and a foreign material, and cleans the waste plastic without using water, can be used.

It is also possible to employ a wet treatment utilizing high pressure water in place of high pressure gas. However, since the wet treatment needs a waste water treatment, it is not practically advantageous. Additionally, a method in which high frequency vibration is applied to a pulverized product so as to forcibly peel the surface portion thereof, and a method in which a surface portion of a waste plastic is chemically eluted by performing a solvent treatment so as to remove the surface portion are exemplified, although these methods are hardly simple. These methods are appropriately selected depending on the kind of a plastic and a use of a recycled product.

In the present invention, the surface portion of a waste plastic is preferably ground to an extent that a foreign material and a deteriorated layer are substantially removed. More specifically, 3 to 30% by weight, preferably 5 to 25% by weight, and more preferably 7 to 20% by weight of the waste plastic is ground before a treatment. If the grinding amount is less than 3% by weight, a foreign material or a deteriorated layer may remain. If the grinding amount is more than 30% by weight, the amount of dust is increased and material recycle efficiency is reduced.

The grinding amount of the surface portion is preferably varied depending on the thickness of the waste plastic. Specifically, if the average thickness of the waste plastic is 2 mm or more, the grinding amount is preferably 3 to 15% by weight. If the average thickness of the waste plastic is less than 2 mm, the grinding amount is preferably 15 to 30% by weight. An average thickness to be ground is 0.1 to 1.0 mm and preferably 0.2 to 0.6 mm. Here, a grinding rate of the surface portion is represented by the following expression:

$$(B/A) \times 100$$

(in the expression, A denotes a weight of a waste plastic which is subjected to a surface treatment, and B denotes a weight of a waste plastic which is passed through a 20 mesh sieve after the surface treatment). The grinding rate is preferably 3 to 30% by weight. In this case, it is preferred that a pulverized product to be treated does not contain any powder which could pass through the 20 mesh sieve. If such powder is present, the powder is omitted from the weights A and B in the above-mentioned calculation. The average thickness to be ground is represented by the following expression:

$$C - D$$

(in the expression, C denotes the average thickness of a waste plastic which is subjected to a surface treatment, and D denotes the average thickness of a waste plastic which remains on the 20 mesh sieve after the surface treatment). As described above, a value of the average thickness is preferably 0.1 to 1.0 mm.

As described above, it is possible to obtain an optimum recovered plastic without any problems by subjecting a waste plastic to a surface treatment to grind a surface portion thereof, even if a foreign material (such as dirt or a dust) is attached on the surface, the surface of the plastic is coated, a tape or a sticker is stuck on the surface, paper is attached on the surface, the surface of the plastic is printed, or an adhesive or the like is attached on the surface. In the surface treatment, a coating layer or a plating layer as well as a foreign material or a deteriorated layer is removed. Furthermore, a part of an undeteriorated layer such as a rupture section layer produced in the first pulverizing step is made into a powder. In view of the above, the surface treatment conditions are controlled so that the powder from the undeteriorated layer does not account for the majority of the powder produced in the surface treatment.

A recovered plastic from the surface treating step (3) is subjected to a homogeneously mixing step (4) preferably via a temporary storing unit (8). In the homogeneously mixing step (4), a predetermined amount of the recovered plastic is mixed and homogenized. A homogeneously mixing apparatus is not specifically limited so long as the apparatus is capable of physically mixing materials. Specific examples of the homogeneously mixing apparatus include a rotary tumbler mixer, a blending mixer, a Henschel mixer, and a V-shaped blender. The homogeneously mixing step (4) is performed for one batch of 100 to 5,000 kg and at a mixing time of 10 to 60 minutes, and preferably for one batch of 500 to 3,000 kg and at a mixing time of 20 to 40 minutes. If one batch is less than 100 kg, a mixing unit is too small. If one batch is more than 5,000 kg, a mixing facility would be large-sized. Therefore, either case is not preferred. If the mixing time is less than 10 minutes, a sufficient mixing can not be performed. If the mixing time is more than 60 minutes, since a treating time is excessively long, it is not preferred in view of a treating operation. Since one batch is regulated depending on the facility ability such as the capacity of a mixing apparatus, one batch is usually preferably set to be 70 to 100% of the ability of a mixing apparatus.

According to the homogeneously mixing step (4) , it is possible to homogenize a recovered plastic to be a recovered plastic having uniform quality without variation. Specifically, various physical properties such as a specific gravity, a melt flow rate, a bending elastic modulus, tensile elongation, a bending strength, an Izod strength, and a Charpy strength can be controlled within ±20% deviation and preferably within ±10% deviation from a measured average value. The recovered plastic is homogenized within the above-mentioned range on batch basis. Therefore, since other batches may have different physical properties or the same physical properties, it is desirable that physical properties are measured for each batch.

In some cases, a powder produced in the surface treatment remains on the recovered plastic treated in the surface treating step (3) or a dust is electrostatically attached thereon. However, it is possible to obtain a more preferred recovered plastic by removing such a fine powder. Specifically, the powder is removed by performing a wind force cleaning treatment which blows away a light weight fine powder by use of a wind force cleaner, or a wet cleaning treatment which washes off a fine powder by use of a washing liquid (e.g. , water) which does not dissolve a plastic to be treated.

It is desirable that a dust collecting unit (13) be provided in the surface treating step (3). A dust composed of a foreign material or a deteriorated resin powder is effectively collected and the collected dust is used as a raw material for a coke, a cement or a cascade type recycle, so as to achieve a recycle system having high efficiency. As an example of the dust collecting unit, a generally known cyclone apparatus can be used.

Furthermore, in the present invention, it is desirable that a quantitative transporting unit (7), which quantitatively transports a recovered plastic, be provided between the pulverizing step (2) and the surface treating step (3). It is possible to perform a quantitative and uniform surface treatment by providing the quantitative transporting unit (7). Examples of the quantitative transporting unit include a belt conveyor type transporting machine, a bucket conveyor type transporting machine, and a screw feeder type transporting machine.

Furthermore, in the present invention, it is desirable that a temporary storing unit (8) , which temporarily stores a recovered plastic, be provided between the surface treating step (3) and the homogeneously mixing step (4). It is possible to temporarily keep and store a recovered plastic newly produced while the homogeneous mixing step is performed, by providing the temporary storing unit before the homogeneously mixing step. As a result, it is possible to continuously operate a treating plant. Examples of the temporary storing units include generally known units such as a silo and a tank.

In addition, in the present invention, it is desirable that a first metal removing unit (10) be provided before the second pulverizing step (2B) and that a second metal removing unit (12) be provided before the homogeneously mixing step (4). The first metal removing unit (10) is desirable because the unit can prevent damage of the treating equipment due to mingling of a foreign metal material in the second pulverizing step (2B). The second metal removing unit (12) is preferred because the unit can prevent mingling of a foreign material in the homogeneously mixing step (4). Examples of the metal removing unit include removal of metal by a magnet, and a metal mingling detecting method by a metal detector.

In the present invention, it is desirable that light weight foreign material removing units (9) and (11) be respectively provided in the quantitative transporting unit (7) and the temporary storing unit (8). Since the light weight foreign material removing unit minimizes the amount of a light weight foreign material (such as paper, or a tape) contained in a recovered plastic, the unit can contribute to the quality improvement of a recovered plastic. Examples of the light weight foreign material removing unit include an air blower and a cyclone.

It is desirable that a recovered plastic homogenized in the homogeneously mixing step (4) be subjected to quality control for each batch in a quality control step (5). Items of the quality control are arbitrary. For example, specific gravity and melt flow rate canbe employed as items of the quality control. It is preferred that a recovered plastic be graded based on the measurements of such items. For instance, if the specific gravity is classified into three classes of A, B and C, and if the melt flow rate is classified into three classes of X, Y and Z, then the recovered plastic is classified into 9 grades based on the quality measurements. The number of the classification can be determined depending on the resin properties of a compound produced in a subsequent incorporating step. Needless to say, physical property items other than specific gravity and melt flow rate including bending elastic modulus, tensile elongation, tensile and/or bending strength, Izod strength, and Charpy strength can be added as items of the quality control depending on the object.

In the quality control step (5) , a recovered plastic in each batch is graded based on the results of quality measurement and a formulation of a compound is determined based on the classification. Usually, quality control of an unused (virgin) plastic is performed by judging whether a produced virgin plastic falls within a predetermined specification value. In contrast, quality control of a recovered plastic in the present invention is for the purpose of classifying physical properties of an indefinite number of waste plastics based on the measurements to control the physical properties.

The recovered plastic graded in the quality control step (5) is used again for the same model of the household electrical appliance in every graded batch. Therefore, a recycling process according to the present invention desirably includes an incorporating step (6) for incorporating materials for a compound (e.g., an additive such as a flame retarder or a virgin plastic) in the recovered plastic. Production of a high quality recycled plastic can be realized by formulating a compound based on quality control for each batch of a recovered plastic. As a result, a physical property difference between a recycled plastic and a so-called all virgin plastic, which was a conventionally unsolved problem, has been nearly overcome.

The formulated compound is subjected to a kneading treatment to be formed into a recycled pellet. It is possible to ease the conditions of the above-mentioned surface treating step because quality deterioration due to a surface deteriorated layer is somewhat reduced in the kneading treatment. More specifically, the previous surface treatment may be only for the purpose of removing a foreign material and therefore may only grind 1 to 5% by weight of a pulverized product before the treatment.

The thus-obtained recycled plastic indicates the same level of physical properties as those of a virgin plastic. However, in some cases, a mechanical property of the recycle plastic is somewhat inferior to that of the virgin plastic. In an application where a high mechanical strength is not required, the recycled plastic can be used alone as a molding compound. In contrast, if a recycled plastic is used for the same cabinet or the like as that was used for the discarded household electrical appliance, it is preferred that the same kind or a different kind of a virgin plastic be incorporated to improve mechanical strength. In this case, an incorporating ratio (based on weight) of the recycled plastic and the same kind or a different kind of the virgin plastic as or from that of the recycled resin is 5/95 to 95/5, preferably 10/90 to 50/50, and more preferably 20/80 to 40/60. Usually, a recycled plastic in which 50% by weight or less of a recycled plastic and 50% by weight or more of a virgin plastic are blended (also referred to as a reformed recycled plastic) may indicate a mechanical strength and a flame retardency equivalent to those of a 100% virgin plastic. In the case of incorporating a different kind of virgin plastic, the combination is appropriately selected to provide satisfactory physical properties.

Especially, in the case where a waste plastic is a flame retardant plastic, if the incorporating rate of a recycled flame retardant plastic in a reformed recycled flame retardant plastic is large, even although MFR (melt flow rate: flowability), Izod impact strength and fracture elongation are inferior, tensile yield strength, tensile fracture strength, bending strength, and bending elastic modulus are equivalent to those of a virgin plastic regardless of the incorporating ratio.

The incorporating method is not specifically limited. For example, a method, which includes mixing a recycled plastic pellet and a virgin plastic pellet in a predetermined ratio and heating and melting the mixture by an extruder or the like to be re-pelletized, is exemplified. Also in the case where only a recycled plastic pellet is used, such a pelletization is preferably performed.

The present invention has made it possible to use a recycled plastic, which was from a waste plastic derived of a household electrical appliance, for the same model of the household electrical appliance. A material recycled from a household electrical appliance to a household electrical appliance is an especially desirable recycle loop for achieving a circulative society. The waste plastic treated in the present invention is not specifically limited. Examples of such a waste plastic include: polystyrene typified by high impact polystyrene (HIPS) or general purpose polystyrene (GPPS); an acrylonitrile-butadiene-styrene copolymer (ABS) resin; polypropylene; polyethylene; polyvinyl chloride; and a polymer alloy or a polymer blend thereof. Especially, since a styrene type resin such as HIPS, GPPS, acrylonitrile-styrene (AS) , ABS or butadiene-styrene methacrylate (MBS) is widely used alone or in combination with others as a base resin of a flame retardant plastic for use in a household electrical appliance, a material recycled according to the present invention is preferably applicable. Especially, the material recycled according to the present invention is most preferably applicable to HIPS and GPPS.

The present invention makes it possible to treat a waste plastic even if the waste plastic is a flame retardant plastic. Since a flame retardant plastic was difficult to be recycled in a conventional manner owing to the existence of a flame retarder, the flame retardant plastic is a suitable plastic for the recycle. process according to the present invention. The flame retarder is not specifically limited. For example, a bromine type flame retarder typified by decabromine diphenylether, a phosphorous type flame retarder or a chlorine type flame retarder referred to as non-decabromine diphenylether, a flame retarder referred to as non-halo and an inorganic type flame retarder such as inorganic hydroxide are applicable. Furthermore, according to the present invention, it is possible to produce a recycled flame retardant plastic (including a reformed recycled flame retardant plastic) having a flame retardency of V-0 or V-2 defined in the UL regulation.

The method of recycling a waste plastic according to the present invention as described above is desirably a so-called dry recycle treatment in which each step constituting a treatment process and each unit involved in the step do not use a liquid such as water, an oil, or a solvent. According to the dry recycle treatment, since it is not necessary to perform a waste water treatment or a waste liquid treatment, the treatment of a by-product is simplified.

Examples

Specific description will be made with referring to Fig. 1 regarding an example in which a material recycle was carried out on a back cover of a television.

In a sorting out step (1) which was carried out in a household electrical appliance recycle center, only a flame retardant polystyrene resin (HIPS, V-0, and270 kg) was sorted out and recovered from the back cover of a television, based on the sound of hammering the resin, or the degree of whitening or the rupture condition when the resin was bent. In a first pulverizing step (2A), the obtained resin was crushed into one having a dimension of 200 mm or less by use of a biaxial type crusher so that a volume of the resin was reduced. As a result of the first pulverizing step (2A) , it was possible to reduce the volume of the back cover of the television (approximately 10 $m^3$) to be packed in a flexible container of 1 $m^3$.

Next, any metal foreign material such as a bolt or a nut mingled in the coarsely crushed product was removed by a large magnet in a metal removing unit (10) provided in a pulverized product transporting path (conveyor).

In a second pulverizing step (2B), the coarsely crushed product from which metal foreign material was removed was charged into a pulverizer having a 20 mm sieve at an outlet thereof to be pulverized into one having a dimension of 20 mm or less.

In a quantitative transporting unit (7), the pulverized product was transported in 5 kg units and at a two-minute interval byuse of a quantitative transportingmachine to the surface treating step (3). By blowing high pressure air to the quantitative transporting machine, a light weight foreign material (such as papers, a tape, or a foreign material produced in the pulverization) was removed in the light weight foreign material removing unit (9).

Next, in the surface treating step (3), a foreign material attached on the pulverized product and a surface deteriorated layer of the pulverized product were ground to be removed by supplying the pulverized product to a dry cleaner employing an air blower. A dust such as a surface foreign material or a surface deteriorated layer produced in the surface treating step (3) was collected into one place by use of an air blower and a 2 mm sieve in a dust collecting unit (13) so as to be packed as a raw material for a coke.

The surface treated pulverized product which had been subjected to the surface treating step (3) was temporarily stored in a storage tank of a temporary storing unit (8). By doing this, it was possible to continuously carry out the surface treating step (3). A light weight foreign material (such as a fine powder attached on the surface of the treatedpulverizedproduct, or paper, or a tape) which was not removed by a light weight foreign material removing unit (9) ) was removed by a light weight foreign material removing unit (11) which blows air to the storage tank.

A recovered plastic, which had been subjected through the temporary storing unit (8) to a metal removing unit (12) so as to again remove any minor metal foreign material, was transported in 500 kg units to a homogeneously mixing step (4) to be agitatedly mixed for approximately 30 minutes in a tumbler mixer.

The homogeneously mixed recovered plastic was regarded as one batch and each batch was fed to a quality control step (5), and data for quality control was collected in the quality control step (5). A formulation of a compound was determined based on the obtained data.

Finally, in an incorporating step (6), a virgin plastic pellet, a flame retarder or the like was incorporated with the recovered plastic based on the compound formulation, and the mixture was palletized to obtain a recycled compound pellet.

The homogeneously mixed recovered plastic was regarded as one batch and data for quality control was collected in the quality control step (5). More specifically, specific gravity and melt flow rate were measured in the quality control step (5), and the recovered plastic was classified into grades shown in Table 1 based on the measurements.

Table 1

| Grade | Specific gravity | Melt flow rate |
|-------|-----------------|----------------|
| A | < 1.14 | < 5 |
| B | < 1.14 | 5 or more and less than 10 |
| C | < 1.14 | 10 or more and less than 15 |
| D | < 1.14 | 15 or more and less than 20 |
| E | < 1.14 | 20 or more |
| F | 1.14 or more | < 5 |
| G | 1.14 or more | 5 or more and less than 10 |
| H | 1.14 or more | 10 or more and less than 15 |
| I | 1.14 or more | 15 or more and less than 20 |
| J | 1.14 or more | 20 or more |

In the incorporating step (final step) (6), in accordance with the grades classified in Table 1, a formulation was determined depending on the physical properties of an obj ective compound pellet and a recycled compound pellet for a back cover of a television was produced.

In accordance with the above-mentioned material recycle processes, the recycled compound pellet obtained from a back cover of a discarded television was subjected to injection molding to again produce a back cover of a television.

In the quality control step (5), recycled compound pellets were produced in accordance with the compound formulations shown in Table 2 regarding 4 grades C, D, H and I shown in Table 1 which accounted for 80% or more of the entire grades.

A formulation, in which the recycled plastics of the respective grades C, D, H and I were incorporated at incorporating rates as shown in Table 2 in 100 parts by weight of an unused (virgin) flame retardant HIPS compound, was regarded as a basic formulation. A recycled compound pellet was prepared by additionally incorporating an additive such as a flame retarder into the basic formulation. As a virgin compound, a pellet having physical properties corresponding to those of the grade I in Table 1 was used.

Table 2

| Grade | Incorporating rate of recycled plastic 100% virgin (parts by weight) | Modification to formulation of 100% virgin |
|---|---|---|
| C | 20 | Additionally formulating 5 parts by weight of flame retarder and 1 part by weight of flow modifier |
| D | 20 | Additionally formulating 5 parts by weight of flame retarder |
| H | 50 | Additionally formulating 1 part by weight of flow modifier |
| I | 50 | No modification |

As a result, it was confirmed that the back covers of a television molded using the entire recycled compound pellets of Table 2 had mechanical properties and a flame retardency equivalent to those of a back cover of a television molded using an unused plastic. Specifically, each of the recycled back covers has a tensile elongation of 30% or more, a bending strength of 35 MPa or more, a bending elastic modulus of 2, 000 MPa or more, an Izod strength of 7 kgf/cm$^2$ or more, and a flame retardency of V-0.

Industrial applicability

According to the present invention as described above, it is possible to perform a high quality material recycle of various kinds of waste plastics (which was regarded as difficult up to now) by a simple process, and especially to realize a closed recycle in which a waste plastic of a discarded household electrical appliance can be used again for the same model of the household electrical appliance. Especially, it is possible to realize a closed recycle of a flame retardant plastic which was not applicable to a closed recycle. The recycle process according to the present invention largely contributes to the achievement of a circulative society.

**Claims**

1. A method of recycling a waste plastic composed of various kinds of plastics, comprising:

   (1) a sorting out step of sorting out the waste plastic in accordance with the kind of resin;
   (2) a pulverizing step of pulverizing the waste plastic;
   (3) a surface treating step of subj ecting the pulverized waste plastic to a surface grinding treatment under the condition that no liquid is used; and
   (4) a homogeneously mixing step in which the surface treated waste plastic is measured to obtain a batch having a predetermined amount and the batch is mixed to obtain a homogenized recovered plastic.

2. A method of recycling a waste plastic according to claim 1, wherein the sorting out step (1) comprises:

   distinguishing the kind of resin by using at least one distinguishing method selected from the group consisting of a distinguishing method based on a sound of hammering the resin, a distinguishing method based on the degree of whitening or a rupture condition when the resin is bent, a distinguishing method based on solubility or erosivity in an organic solvent, a distinguishing method based on burning manner, color of smoke or smell when the resin is burned, a distinguishing method based on a spectroscopic analysis such as middle infrared, near infrared, infrared or Raman spectrometry, and a distinguishing method based on a difference in specific gravity; and

sorting out the same kinds of resin.

3. A method of recycling a waste plastic according to claim 1 or 2, wherein the pulverizing step (2) comprises:

   (2A) a first pulverizing step of crushing the waste plastic into a crushed plastic having a dimension of 300 mm or less; and
   (2B) a second pulverizing step of pulverizing the crushed waste plastic into a pulverized plastic having a dimension of 20 mm or less.

4. A method of recycling a waste plastic according to any one of claims 1 to 3, further comprising, subsequent to the homogeneously mixing step (4), an incorporating step (6) of incorporating an additive or a virgin plastic into each recovered and homogenized plastic depending on the quality of each recovered and homogenized plastic.

5. A method of recycling a waste plastic according to any one of claims 1 to 4, wherein the surface treating step (3) comprises collecting produced dust in a collecting means.

6. A method of recycling a waste plastic according to any one of claims 1 to 5, further comprising quantitatively transporting the waste plastic between the pulverizing step (2) and the surface treating step (3) by quantitative transporting means.

7. A method of recycling a waste plastic according to any one of claims 1 to 6, further comprising temporarily storing the surface treated waste plastic, between the surface treating step (3) and the homogeneously mixing step (4) by temporary storing means.

8. A method of recycling a waste plastic according to claim 6 or 7, further comprising removing light weight foreign material in the quantitative transporting means or the temporary storing means by removing means.

9. A method of recycling a waste plastic according to any one of claims 1 to 8, wherein the surface treating step (3) removes a foreign material existing on the surface of the waste plastic or a surface deteriorated layer of the waste plastic.

10. A method of recycling a waste plastic according to any one of claims 1 to 9, wherein the surface treating step (3) is a dry cleaning treatment employing an air blower.

11. A method of recycling a waste plastic according to any one of claims 1 to 10, wherein the homogeneously mixing step (4) is performed for a batch having a predetermined amount of 100 to 5, 000 kg and at a mixing time of 10 to 60 minutes.

12. A method of recycling a waste plastic according to any one of claims 2 to 11, further comprising removing metal between the first pulverizing step (2A) and the second pulverizing step (2B), or before the homogeneously mixing step (4) by metal removing means.

13. A method of recycling a waste plastic according to any of claims 1 to 12, wherein the waste plastic is from a discarded household electrical appliance and the recycled recovered plastic is used again for a same model of the household electrical appliance.

14. A method of recycling a waste plastic according to any one of claims 1 to 13, wherein the waste plastic is a flame retardant plastic.

15. A method of recycling a waste plastic according to any one of claims 5 to 14, which uses the dust collected by the dust collecting means as a raw material for a coke, a cement or a blast furnace.

16. A method of recycling a waste plastic according to any one of claims 1 to 15, wherein the waste plastic is treated with a dry recycle treatment under the condition that no liquid is used throughout the processes.

17. A method of recycling a waste plastic according to any one of the preceding claims, wherein said waste plastic is from a household electrical appliance, further comprising, after homogeneously mixing step (4):

(5) a quality control step of grading the recovered plastic for each batch; and

(6) an incorporating step of formulating the recoveredplastic for use for the same model of the household electrical appliance.

18. A method of recycling a waste plastic according to claim 17, wherein the quality control step (5) grades the recovered plastic based on specific gravity and melt flow rate as items of the quality control.

19. A method of recycling a waste plastic according to claim 17 or 18, wherein the incorporation step (6) determines the formulation of a compound based on the classification corresponding to the results of the quality control for each batch of the waste plastic.

20. A method of recycling a waste plastic according to claim 19, wherein the waste plastic is a flame retardant plastic which incorporates an additive or a virgin plastic.

21. A method of recycling a waste plastic according to any one of claims 17 to 20, wherein the waste plastic is treated with a dry recycle treatment under a condition that no liquid is used throughout the processes.

## Fig.1

**European Patent Office**

**EUROPEAN SEARCH REPORT**

Application Number

EP 03 25 6158

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 006, no. 105 (M-136), 15 June 1982 (1982-06-15) & JP 57 036616 A (MITSUBISHI CHEM IND LTD), 27 February 1982 (1982-02-27) * abstract * | 1-21 | B29B17/02 B29B17/00 |
| P,X | WO 03 020486 A (NIPPON STEEL) 13 March 2003 (2003-03-13) * the whole document * | 1-21 | |
| X | EP 0 542 593 A (EIN CO LTD) 19 May 1993 (1993-05-19) * the whole document * | 1-21 | |
| X | WO 02 32988 A (JUNG IN ;TAN TAN CO LTD (KR)) 25 April 2002 (2002-04-25) * abstract * | 1-21 | |
| X | FR 2 643 011 A (MICRONYL SA) 17 August 1990 (1990-08-17) * figure 3 * | 1-21 | TECHNICAL FIELDS SEARCHED (Int.Cl.7) |
| A | US 4 067 826 A (EMERY GUY) 10 January 1978 (1978-01-10) * figure 2 * | 2 | B29B |
| A | EP 1 153 720 A (DSM NV) 14 November 2001 (2001-11-14) * abstract * | 2 | |
| A | US 5 522 554 A (BLANK REINHARD A ET AL) 4 June 1996 (1996-06-04) * abstract * | 1-21 | |
| A | EP 0 582 300 A (TOYOTA MOTOR CO LTD) 9 February 1994 (1994-02-09) * figure 1 * | 1-21 | |

The present search report has been drawn up for all claims

| Place of search | Date of completion of the search | Examiner |
|---|---|---|
| MUNICH | 9 January 2004 | Kofoed, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

ANNEX TO THE EUROPEAN SEARCH REPORT
ON EUROPEAN PATENT APPLICATION NO.

EP 03 25 6158

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2004

| Patent document cited in search report | | Publication date | Patent family member(s) | | Publication date |
|---|---|---|---|---|---|
| JP 57036616 | A | 27-02-1982 | JP | 1487521 C | 23-03-1989 |
| | | | JP | 63035405 B | 14-07-1988 |
| WO 03020486 | A | 13-03-2003 | WO | 03020486 A1 | 13-03-2003 |
| EP 0542593 | A | 19-05-1993 | AU | 658943 B2 | 04-05-1995 |
| | | | AU | 2834692 A | 20-05-1993 |
| | | | CA | 2081174 A1 | 16-05-1993 |
| | | | DE | 69223746 D1 | 05-02-1998 |
| | | | DE | 69223746 T2 | 30-04-1998 |
| | | | DE | 69231183 D1 | 20-07-2000 |
| | | | DE | 69231183 T2 | 14-12-2000 |
| | | | EP | 0542593 A2 | 19-05-1993 |
| | | | EP | 0745465 A2 | 04-12-1996 |
| | | | ES | 2110479 T3 | 16-02-1998 |
| | | | ES | 2147633 T3 | 16-09-2000 |
| | | | JP | 2915728 B2 | 05-07-1999 |
| | | | JP | 6111648 A | 22-04-1994 |
| | | | JP | 2945809 B2 | 06-09-1999 |
| | | | JP | 6106089 A | 19-04-1994 |
| | | | NO | 924299 A | 18-05-1993 |
| | | | US | 5323971 A | 28-06-1994 |
| | | | JP | 3315102 B2 | 19-08-2002 |
| | | | JP | 2000102924 A | 11-04-2000 |
| | | | JP | 3048283 B2 | 05-06-2000 |
| | | | JP | 6106536 A | 19-04-1994 |
| | | | KR | 154512 B1 | 16-11-1998 |
| WO 0232988 | A | 25-04-2002 | KR | 2001073978 A | 04-08-2001 |
| | | | KR | 2001070721 A | 27-07-2001 |
| | | | AU | 9605901 A | 29-04-2002 |
| | | | WO | 0232988 A1 | 25-04-2002 |
| FR 2643011 | A | 17-08-1990 | FR | 2643011 A1 | 17-08-1990 |
| US 4067826 | A | 10-01-1978 | FR | 2280492 A1 | 27-02-1976 |
| | | | AT | 341460 B | 10-02-1978 |
| | | | AU | 497220 B2 | 07-12-1978 |
| | | | AU | 8358475 A | 03-02-1977 |
| | | | BE | 831870 A1 | 17-11-1975 |
| | | | DE | 2534309 A1 | 12-02-1976 |
| | | | DK | 345275 A | 01-02-1976 |
| | | | GB | 1478259 A | 29-06-1977 |
| | | | JP | 51037970 A | 30-03-1976 |
| | | | LU | 73087 A1 | 02-03-1976 |
| | | | NL | 7509170 A | 03-02-1976 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 03 25 6158

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2004

| Patent document cited in search report | | Publication date | Patent family member(s) | | Publication date |
|---|---|---|---|---|---|
| US 4067826 | A | | SE | 7508655 A | 02-02-1976 |
| | | | AT | 594975 A | 15-06-1977 |
| | | | ES | 440489 A1 | 16-06-1977 |
| | | | IT | 1040278 B | 20-12-1979 |
| | | | NO | 752677 A | 03-02-1976 |
| EP 1153720 | A | 14-11-2001 | EP | 1153720 A1 | 14-11-2001 |
| | | | AU | 5892201 A | 20-11-2001 |
| | | | EP | 1281064 A1 | 05-02-2003 |
| | | | WO | 0186267 A1 | 15-11-2001 |
| | | | US | 2003111606 A1 | 19-06-2003 |
| US 5522554 | A | 04-06-1996 | DE | 4301066 A1 | 21-07-1994 |
| | | | EP | 0607790 A1 | 27-07-1994 |
| EP 0582300 | A | 09-02-1994 | JP | 6228361 A | 16-08-1994 |
| | | | JP | 2921281 B2 | 19-07-1999 |
| | | | JP | 6055539 A | 01-03-1994 |
| | | | JP | 6106534 A | 19-04-1994 |
| | | | JP | 2842086 B2 | 24-12-1998 |
| | | | JP | 6106535 A | 19-04-1994 |
| | | | JP | 6134440 A | 17-05-1994 |
| | | | DE | 69316100 D1 | 12-02-1998 |
| | | | DE | 69316100 T2 | 20-05-1998 |
| | | | EP | 0582300 A1 | 09-02-1994 |
| | | | US | 5458829 A | 17-10-1995 |

EPO FORM P0459

For more details about this annex : see Official Journal of the European Patent Office, No. 12/82